# FASCICULE DE BREVET EUROPEEN

(11) **EP 3 133 681 B1**
(45) Date de publication et mention de la délivrance du brevet: **24.01.2018**
(21) Numéro de dépôt: 16184901.3
(22) Date de dépôt: 19.08.2016
(51) Int. Cl.: H01M 4/86, H01M 8/1004, H01M 8/0245, H01M 8/1018, H01M 8/04291

(54) **PILE À COMBUSTIBLE À COUCHE DE GESTION D'EAU INTÉGRÉE ET SON PROCÉDÉ DE RÉALISATION**
BRENNSTOFFZELLE MIT INTEGRIERTER WASSERMANAGEMENTSCHICHT, UND IHR HERSTELLUNGSVERFAHREN
FUEL CELL WITH BUILT-IN WATER MANAGEMENT LAYER AND METHOD FOR MANUFACTURING SAME

(30) Priorité: 19.08.2015 FR 1557805
(43) Date de publication de la demande: 22.02.2017
(73) Titulaire: Commissariat à l'Energie Atomique et aux Energies Alternatives, 75015 Paris (FR)
(72) Inventeur: Coz, Erwan, 38000 Grenoble (FR); Thery, Jessica, 38430 Saint Jean de Moirans (FR); Faucheux, Vincent, 38250 Lans en Vercors (FR); Capron, Philippe, 38730 Virieu sur Bourbre (FR)
(74) Mandataire: Talbot, Alexandre

(56) Documents cités:
- US-A- 5 575 012
- US-A1- 2005 084 742
- US-A1- 2006 078 784

## Description

### Domaine technique de l'invention

L'invention est relative à la gestion de l'eau dans les piles à combustible et plus particulièrement, dans les piles à combustible à membrane échangeuse de protons.

### État de la technique

Une pile à combustible à membrane échangeuse de proton (PEMFC) est un générateur électrique fonctionnant à basse température (à des températures inférieures à 100°C), qui produit de l'électricité, de l'eau et de la chaleur par combustion électrochimique d'hydrogène et d'oxygène.

L'eau est formée, lors du fonctionnement de la pile, au niveau de la cathode selon la demi-équation : ½ O₂ + 2H⁺ + 2e⁻ → H₂O

Il est essentiel de pouvoir, non seulement, autoriser l'apport d'oxygène mais également évacuer l'eau produite au niveau de la cathode.

Pour favoriser la gestion de l'eau au niveau de la cathode, il est, par exemple, possible d'ajouter au niveau du collecteur de courant des matériaux conducteurs poreux tels que des tissus ou des papiers en carbone.
Cependant, ce type de matériau est coûteux. De plus, il n'est pas adapté à une architecture planaire présentant plusieurs cellules unitaires adjacentes interconnectées. En effet, le matériau conducteur en contact avec les différentes cellules, et plus particulièrement, avec les différents collecteurs de courant, peut induire un court-circuit.

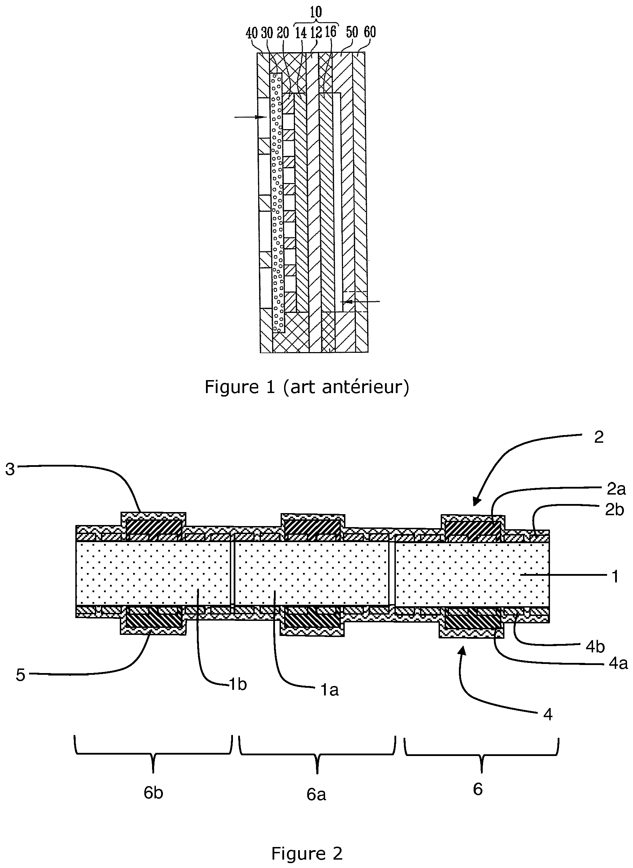

A la place d'un matériau conducteur, il est également possible d'utiliser un matériau isolant et hydrophobe.
Par exemple, dans le document US 2014/0038075, il est indiqué que les cathodes peuvent être protégées du dessèchement ou d'un excès d'humidité en déposant une couche hydrophobe sur la surface de la pile à combustible. La couche hydrophobe peut être une couche poreuse en polytétrafluoroéthylène.
Le document US 2008/0280188 décrit également un filtre en matière hydrophobe 30, positionné entre le collecteur de courant cathodique 20 et la plaque d'extrémité cathodique 40 (figure 1).
Le filtre est configuré pour autoriser l'écoulement de l'air jusqu'à la cathode et pour limiter l'évacuation de l'humidité, pour empêcher la membrane 12 et/ou la cathode 14 de sécher lors du fonctionnement de la cellule. Le filtre peut être en téflon®. Le filtre est poreux, la taille des pores allant de 5*µ*m à 20*µ*m. Il est indiqué que si la taille des pores est inférieure à 5*µ*m, l'évacuation de l'humidité est inhibée. Si la taille des pores est supérieure à 20*µ*m, une importante quantité d'humidité est évacuée, ce qui peut conduire à un dessèchement de la membrane.

### Objet de l'invention

L'invention a pour but de remédier aux inconvénients de l'art antérieur et, en particulier, de proposer une pile à combustible présentant des performances électrochimiques améliorées.

Cet objet est atteint par un procédé de réalisation d'une pile à combustible comprenant les étapes successives suivantes :
- fournir un substrat comprenant :
   ∘ au moins un assemblage membrane électrode, formé d'une membrane électrolytique disposée entre une première électrode et une seconde électrode,
   ∘ un premier collecteur de courant disposé sur la première électrode,
- déposer une solution de fluoropolymère sur le premier collecteur de courant,
- faire évaporer le solvant de la solution, de manière à former une couche mince poreuse en fluoropolymère.

Cet objet est également atteint par une pile à combustible réalisée par le procédé mentionné ci-dessus, la pile à combustible comprenant :
- au moins un assemblage membrane-électrode, formé d'une membrane électrolytique disposée entre une première électrode et une seconde électrode,
- un premier collecteur de courant disposé sur la première électrode,
- une couche mince poreuse en fluoropolymère recouvrant le premier collecteur de courant de manière à ce que la couche mince poreuse en fluoropolymère soit séparée de l'assemblage membrane-électrode par le premier collecteur de courant, ladite couche mince poreuse en fluoropolymère étant formée de particules de fluoropolymère ayant un diamètre allant de 150nm à 350nm.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
- la figure 1 représente, de manière schématique, en coupe une pile à combustible selon l'art antérieur,
- la figure 2 représente, de manière schématique et en coupe, une pile à combustible selon un mode de réalisation de l'invention,
- la figure 3 représente un cliché obtenu par microscopie électronique à balayage d'une couche mince poreuse de PTFE, en vue de dessus, selon un mode de réalisation particulier de l'invention ; l'échelle représente 1*µ*m,
- la figure 4 représente un cliché obtenu par microscopie électronique à balayage d'une couche mince poreuse de PTFE, vue en coupe, selon un mode de réalisation particulier de l'invention ; l'échelle représente 10*µ*m,
- la figure 5 représente des courbes de polarisation obtenues pour différentes piles à combustible : une pile à combustible dépourvue de couche mince poreuse en PTFE (courbe pleine), une pile à combustible munie d'une couche mince de PTFE obtenue par étirage (courbe avec trait discontinu), une pile à combustible munie d'une couche mince de PTFE obtenue par dépôt par spray (courbe en pointillé),
- la figure 6 représente les performances au cours du temps, à un potentiel de 0,7V/cellule, de différentes piles à combustible : une pile à combustible munie d'une couche mince de PTFE obtenue par étirage (courbe pleine), une pile à combustible munie d'une couche mince de PTFE obtenue par dépôt par spray (courbe en pointillé).

### Description d'un mode de réalisation préférentiel de l'invention

Le procédé de réalisation d'une pile à combustible, et plus particulièrement d'une pile à combustible à membrane échangeuse de protons, comprend les étapes successives suivantes :
- fournir un substrat comprenant :
   ∘ au moins un assemblage membrane électrode (AME) 1, formé d'une membrane électrolytique disposée entre une première électrode et une seconde électrode,
   ∘ un premier collecteur de courant 2 disposé sur la première électrode,
- former une couche mince poreuse en fluoropolymère 3 sur le premier collecteur de courant 2.

Comme représenté à la figure 2, un AME 1 comporte une membrane associée à une première électrode et à une seconde électrode.
La membrane d'un AME peut être essentiellement constituée d'un matériau de type perfluoropolymère ou polyimide ou polyéther, tel que le matériau commercialisé par la société DuPont sous la marque Nafion®.
Les première et seconde électrodes sont destinées à former la cathode et l'anode de l'AME 1. Les première et seconde électrodes comportent chacune une couche de diffusion et un catalyseur.
La première électrode est, préférentiellement, la cathode et la seconde électrode l'anode.
Selon un autre mode de réalisation, la première électrode pourrait être l'anode.

La couche mince poreuse en fluoropolymère 3 est hydrophobe. Par hydrophobe, on entend que lorsqu'une goutte d'eau est déposée sur la couche, l'angle de contact est strictement supérieur à 90°.
Il s'agit d'une couche de gestion de l'eau. La couche hydrophobe assure l'équilibre entre la rétention de l'eau, nécessaire à une bonne hydratation de la membrane, et l'évacuation de l'eau.

Le dépôt d'une couche mince poreuse en fluoropolymère 3 peut être réalisé selon différents procédés.
Par exemple, la demande internationale WO 99/62993 décrit une méthode de préparation d'une couche mince poreuse en polytétrafluoroéthylène (PTFE) par fusion de particules de PTFE. Les couches poreuses obtenues présentent des épaisseurs comprises entre 50*µ*m et 2000*µ*m. Elles sont utilisées dans des filtres à gaz ou pour filtrer des liquides. Le procédé nécessite de chauffer les dispositifs à des températures de l'ordre de 345-355°C.

Les films minces poreux en PTFE peuvent également être réalisés en déposant une dispersion aqueuse contenant des particules de PTFE polymérisées sur un substrat (EP0369466). La solution a une concentration massique comprise entre 0,1% et 25%. Après séchage et frittage à une température comprise entre 330°C et 380°C, un film poreux est obtenu. Les films sont réalisés en vue de produire des capteurs.
Cependant, les conditions de réalisation de ces matériaux (température, procédé) ne sont pas compatibles avec l'intégration directe sur pile.

La couche mince poreuse en fluoropolymère 3 est réalisée selon les étapes suivantes :
- déposer une solution de fluoropolymère sur le premier collecteur de courant 2,
- faire évaporer le solvant de la solution, de manière à former une couche mince poreuse en fluoropolymère 3.

Avec un tel dépôt la couche mince de fluoropolymère 3 est en contact direct avec le premier collecteur de courant 2. Il n'y a pas ou très peu d'espace entre le collecteur de courant et la couche mince. Cette architecture compacte évite la création de zones de condensation préférentielles au voisinage des collecteurs de courant. Les performances de la pile sont améliorées.

La solution de fluoropolymère peut être déposée par enduction ou par dépôt sous vide. Préférentiellement, la solution de fluoropolymère est déposée par sérigraphie, par jet d'encre, ou par spray.
Le dépôt par spray s'effectue par entrainement de la solution par un gaz vecteur sous pression, tel que l'air, l'azote ou l'argon par exemple, au travers d'une buse. De fines gouttelettes de liquide sont éjectées et viennent se déposer sur le substrat, formant la couche de matériau après évaporation du solvant, c'est-à-dire après séchage.

Avantageusement, le séchage d'une couche mince déposée par spray est très rapide. Dans le cas d'un dépôt sous vide, aucune étape de séchage n'est nécessaire.

Le dépôt de la solution de fluoropolymère est réalisé à une température inférieure à 130°C et, avantageusement, comprise entre 100°C et 130°C. Le séchage sera facilité et le dépôt sera plus homogène.
Avantageusement, au moins le substrat est à une température entre 100°C et 130°C lors du dépôt.
Pour obtenir une telle température, le substrat peut être, par exemple, disposé sur une plaque chauffante.
Selon un mode de réalisation alternatif, le substrat pourrait être positionné dans une chambre de dépôt chauffée ou, selon un autre mode de réalisation, le dépôt pourrait être réalisé sous vide.

Après dépôt de la solution, le solvant est évaporé de manière à former une couche mince solide. Après évaporation du solvant, la couche mince 3 est solidaire du collecteur de courant.
Le solvant est, avantageusement, évaporé à une température inférieure à 150°C afin de ne pas détériorer l'AME.

Le procédé de réalisation de la couche mince poreuse 3 ne nécessite pas d'étape de frittage ou de recuit à haute température. Par haute température, on entend des températures supérieures à 150°C. Avantageusement, tout le procédé est réalisé à une température inférieure à 130°C.

La solution de fluoropolymère est déposée sur le premier collecteur de courant 2.
Avantageusement, au moins une zone de la première électrode n'est pas recouverte par le premier collecteur de courant 2 : la solution peut être déposée simultanément sur le premier collecteur de courant 2 et sur la première électrode 2. Un seul dépôt permet de recouvrir simultanément la première électrode et le premier collecteur de courant 2 par une couche mince poreuse en fluoropolymère.
La couche mince poreuse 3 est alors en contact intime avec la première électrode, ce qui empêche la formation de zones de condensation privilégiées. Durant le fonctionnement de la pile, la proximité immédiate entre la région de formation d'eau et la première électrode évite, avantageusement, la condensation et la nucléation de gouttes d'eau à proximité de l'électrode, ce qui améliore les propriétés électrochimiques de la pile à combustible.

Préférentiellement, le premier collecteur de courant 2 comporte une pluralité de passages transversaux destinés à permettre le passage d'un fluide vers la première électrode.
Ainsi, l'hydrogène peut passer à travers les passages transversaux dans le cas d'un collecteur de courant anodique et l'oxygène peut passer à travers les passages transversaux dans le cas d'un collecteur de courant cathodique.
Avantageusement, l'eau produite au cours du fonctionnement de la pile à combustible est évacuée par les mêmes passages transversaux.

Avantageusement, la couche mince poreuse en fluoropolymère 3 est formée en déposant une solution de fluoropolymère simultanément sur le premier collecteur de courant 2 et sur la première électrode.
Selon un premier mode de réalisation, le premier collecteur de courant 2 peut être structuré sous la forme d'une grille ou sous la forme d'un peigne.

Selon un autre mode de réalisation, le premier collecteur de courant peut également être uniformément poreux ou bien il peut comporter une alternance de zones poreuses et de zones non poreuses, les pores jouant, dans les deux cas, le rôle des passages transversaux des collecteurs de courant.

Préférentiellement, le premier collecteur de courant 2 comporte au moins une zone pleine 2a et une zone poreuse 2b. La zone poreuse est, par exemple, formée par un métal poreux.
Selon une autre alternative, le premier collecteur de courant 2 ne pourrait être formé que d'une zone poreuse 2b.
Lorsque la couche mince de fluoropolymère 3 est formée sur une zone poreuse 2b, l'obtention d'une couche mince poreuse est facilitée.

La pile à combustible comporte un second collecteur de courant 4 disposé sur la seconde électrode. Le second collecteur de courant 4 présente, avantageusement, la même structure que le premier collecteur de courant.
Comme représenté sur la figure 2, les premier 2 et second 4 collecteurs de courant sont, préférentiellement, formés d'une zone pleine 2a, 4a et d'une zone poreuse 2b, 4b.

Selon un mode de réalisation particulier de l'invention, une seconde couche mince poreuse en fluoropolymère 5 est formée sur le second collecteur de courant 4 et la seconde électrode.
Avantageusement, la présence d'une couche poreuse 5 hydrophobe à l'anode permet de limiter la rétrodiffusion vers l'anode et donc d'équilibrer le transfert aqueux.
Selon un autre mode de réalisation, des couches minces poreuses 3, 5 sont formées sur les premier 2 et second 4 collecteurs de courant. Avantageusement, la rétrodiffusion vers l'anode est limitée et, en même temps, le transfert aqueux entre l'anode et la cathode est équilibré.

Les collecteurs de courant 2, 4 sont, avantageusement, en métal. Il peut s'agir de collecteurs de courant en carbone, en or, en platine, en argent ou tout autre métal conducteur.

Les collecteurs de courant 2, 4 sont réalisés par tout type de méthodes connues pour réaliser des couches minces. Ils peuvent, notamment, être réalisés par dépôt physique en phase vapeur (PVD ou « Physical Vapour Déposition), par dépôt chimique en phase vapeur (CVD ou « Chemical Vapour Déposition), par sérigraphie ou par dépôt électrochimique.

La solution de fluoropolymère déposée sur les collecteurs de courant 2, 4 est une solution de fluoropolymère polymérisé par émulsion et dilué dans de l'eau. Avantageusement, l'eau est de l'eau déionisée.
La solution de fluoropolymère a une concentration massique comprise entre 10% et 60%.
Le séchage sera d'autant plus rapide que la concentration est élevée, mais l'épaisseur de la couche déposée et les contraintes en résultant augmentent également, ce qui peut conduire à un dépôt avec des craquelures, présentant de moins bonnes propriétés d'adhésion
Préférentiellement, la concentration massique est comprise entre 20% et 40%. Avec de tels pourcentages, la tenue mécanique du dépôt est améliorée tout en permettant un séchage rapide.

Préférentiellement, le fluoropolymère est choisi parmi le polytétrafluoroéthylène, l'éthylène propylène fluoré, l'éthylène tétrafluoroéthylène et le perfluoroalkoxy.

Selon un mode de réalisation particulier, des charges hydrophiles sont ajoutées à la solution pour diminuer le caractère hydrophobe du matériau final. Rendre la couche mince poreuse plus hydrophile est particulièrement intéressant lorsque la pile à combustible fonctionne à plus haute température (par exemple au-dessus de 60°C). Un matériau plus hydrophile retiendra mieux l'humidité et permettra une meilleure hydratation de la membrane. Il peut s'agir par exemple de diminuer l'hydrophobicité de manière avoir un angle de contact de 120° au lieu de 140°.

Cependant, même en ajoutant des charges hydrophiles, le matériau restera, avantageusement, hydrophobe.
Les charges hydrophiles sont, préférentiellement, des nanoparticules d'oxyde. Par exemple, des nanoparticules de SiO₂, de TiO₂, d'Al₂O₃ ou encore de carbone peuvent être utilisées.

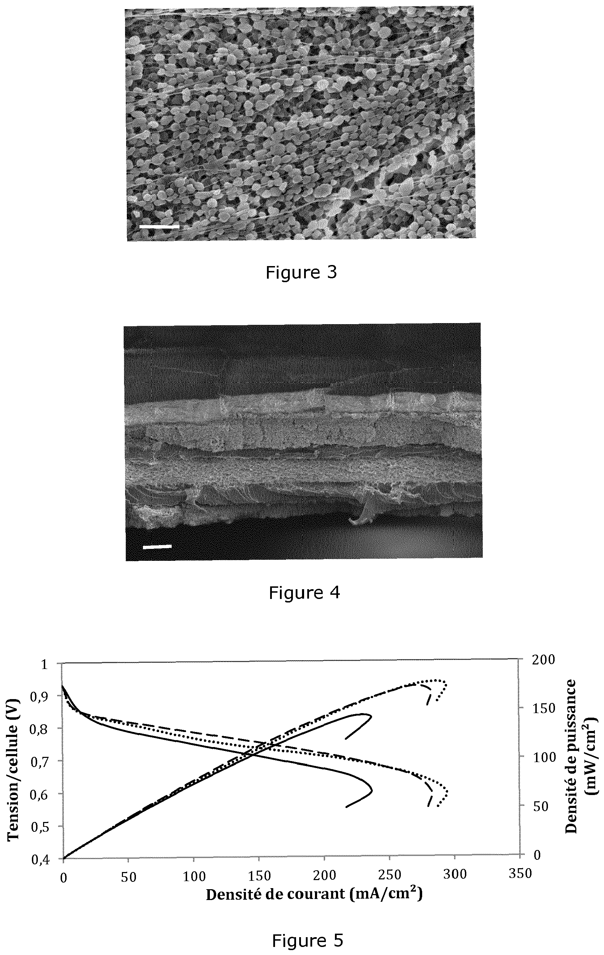

La couche mince poreuse en fluoropolymère 3, obtenue selon ce procédé de réalisation et recouvrant le collecteur de courant, est formée de particules de fluoropolymère ayant un diamètre allant de 150nm à 10*µ*m, et de préférence allant de 150nm à 350nm.
Les particules de fluoropolymère sont reliées entre elles par des fils de fluoropolymère ayant une longueur allant de 1*µ*m à 10*µ*m (voir figure 3).
Les fils de fluoropolymère présentent un diamètre inférieur à 100nm. Avantageusement, les fils assurent la cohésion de la couche mince.
Les pores de la couche mince poreuse en fluoropolymère 3 présentent, avantageusement, des dimensions allant de 100nm à 1*µ*m.
Des pores de faibles dimensions facilitent l'expulsion de l'eau sous forme vapeur tout en évitant son retour sous forme liquide.

La couche mince poreuse en fluoropolymère a une épaisseur allant de 0,1*µ*m à 10*µ*m.

Alternativement, plusieurs couches minces de fluoropolymère peuvent être déposées successivement de manière à former une couche mince d'une épaisseur supérieure à 10*µ*m.
Avantageusement, lorsque plusieurs couches sont déposées, un temps de séchage compris entre 1 seconde et une minute sera maintenu entre deux dépôts successifs.
Un masque peut également être utilisé pour former une couche hydrophobe présentant des épaisseurs différentes dans un même plan.

Avantageusement, différentes épaisseurs et/ou plusieurs dépôts sont réalisés lorsque, dans une pile à combustible, des zones plus chaudes nécessitent une rétention d'eau plus forte.

L'épaisseur maximale de la couche mince poreuse finale est, avantageusement, inférieure à 100*µ*m et, encore plus préférentiellement, inférieure à 50*µ*m.

Dans le cas de dépôts successifs, il est possible de réaliser une première couche mince poreuse comprenant des particules ayant un diamètre de l'ordre de 300nm, puis de réaliser une seconde couche mince poreuse avec des particules de plus grandes dimensions, par exemple, avec des particules ayant un diamètre compris entre 1*µ*m et 10*µ*m.

Une fois la couche mince poreuse en fluoropolymère déposée, comme illustré à la figure 2, la pile à combustible comprend :
- un assemblage membrane-électrode 1, formé d'une membrane électrolytique disposée entre une première électrode et une seconde électrode,
- un premier collecteur de courant 2 disposé sur la première électrode,
- un second collecteur de courant 4 disposé sur la seconde électrode,
- une couche mince poreuse 3 de fluoropolymère recouvrant le premier collecteur de courant 2,
- et, éventuellement, une couche mince poreuse en fluoropolymère 5 recouvrant le second collecteur de courant 4.

Par « recouvrant », on entend que le premier collecteur de courant 2 est solidaire de la couche mince poreuse en fluoropolymère 3. Ces éléments sont en contact physique. Il en va de même pour le second collecteur de courant 4 et la couche mince poreuse en fluoropolymère 5.

La pile à combustible est, avantageusement, une pile à combustible de type planaire.
Comme représenté sur la figure 2, dans une architecture planaire, plusieurs piles élémentaires 6, 6a et 6b (aussi appelées cellules élémentaires) sont associées électriquement les unes aux autres.
Les cellules élémentaires peuvent être connectées électriquement en parallèle pour pouvoir délivrer un courant important et/ou en série pour augmenter la tension disponible aux bornes de la pile.
Sur la figure 2, chaque cellule élémentaire 6, 6a et 6b comprend un AME 1, 1a et 1b, respectivement, chaque AME étant munie d'une membrane indépendante des autres cellules. Selon une autre alternative, les différentes cellules élémentaires 6, 6a et 6b pourraient partagées une membrane commune.
Chaque AME étant muni d'un premier collecteur de courant et d'un second collecteur de courant.
Le procédé permet de déposer la couche mince poreuse hydrophobe simultanément sur les différents collecteurs de courant disposés au niveau d'une même face du dispositif.

Avantageusement, la présence d'une ou plusieurs couches poreuses en fluoropolymère dans une telle architecture planaire réduit considérablement l'assèchement de la membrane et évite, en même temps une humification excessive de la membrane, lors des cycles de fonctionnement et d'arrêt de la pile.

Une fois réalisée, la pile à combustible planaire est intégrée dans un capot pour permettre la connexion avec le combustible. Le capot rapporté, et généralement scellé à la pile, est constitué par un matériau inerte et assure l'étanchéité du système.

Le procédé de réalisation va maintenant être décrit au moyen des exemples ci-dessous donnés à titre illustratif et non limitatif.

Une solution de polytétrafluoroéthylène (PTFE) polymérisé par émulsion à une concentration de 60%, fournie par la société Sigma-Aldrich, est diluée dans de l'eau déionisée pour obtenir une concentration massique finale de 30%.
Une plaque chauffante est utilisée pour chauffer le substrat. Le substrat est formé par une pile à combustible comportant 10 cellules interconnectées, dont le collecteur de courant cathodique est en métal poreux.
Le dépôt est réalisé par spray.
Après un rapide séchage (1 minute à 130°C), un réseau poreux constitué de particules de PTFE d'une dimension comprise entre 150 nm et 350 nm, et reliées entre elles par des fils de PTFE d'un diamètre d'environ 1nm et d'une longueur de plusieurs microns est obtenu (figure 3). La figure 4 représente une vue en coupe de la couche mince obtenue.

L'angle de goutte mesuré sur la couche mince hydrophobe, représentée à la figure 3, est d'environ 140°, ce qui confirme le caractère hydrophobe de la couche mince.

Afin de comparer les performances de la pile à combustible munie d'une couche mince poreuse, deux échantillons comparatifs ont été préparés.
Le premier échantillon est une pile à combustible dépourvue de couche hydrophobe. Le second échantillon est une pile à combustible munie d'une couche micro-poreuse obtenu par étirage de PTFE (taille des pores : 4*µ*m, épaisseur 190*µ*m).

La figure 5 représente la courbe de polarisation quasi-statique pour les différents échantillons. Les mesures ont été réalisées à la fin d'un palier de 30min pour chaque potentiel.
Les performances obtenues avec une couche microporeuse et avec une couche mince poreuse selon le procédé de l'invention sont semblables.

Les performances de piles munies d'une couche hydrophobe sont supérieures à celle d'une pile dépourvue de couche hydrophobe.

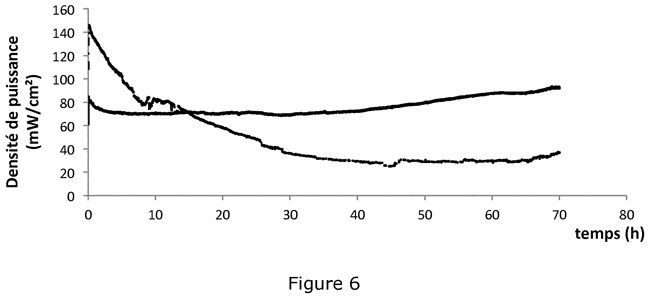

En revanche, lors d'un fonctionnement continu à 0,7V/cellule (figure 6), la pile ayant la couche mince poreuse selon l'invention ne se dégrade pas : ses performances augmentent au cours du temps, contrairement à la pile dont la gestion de l'eau est assurée par une couche microporeuse.
Cette dernière, bien que permettant d'obtenir rapidement de bonnes performances, conduit par la suite à un noyage critique, en raison de la condensation apparaissant entre le collecteur cathodique et la membrane.
Le noyage, lié à l'accumulation d'eau liquide, est évité avec le dépôt par spray, notamment en raison du contact intime entre cette couche et la zone de production d'eau.

La couche mince poreuse en fluoropolymère est utilisée comme couche hydrophobe, comme couche de gestion de l'eau, dans une pile à combustible.
La couche mince poreuse en fluoropolymère déposée joue le rôle de valve anti-retour, favorisant l'expulsion d'eau sous forme de vapeur mais n'autorisant pas son retour vers la cathode sous forme liquide.

## Revendications

1. Procédé de réalisation d'une pile à combustible comprenant les étapes successives suivantes :
- fournir un substrat comprenant :
∘ au moins un assemblage membrane électrode (1), formé d'une membrane électrolytique disposée entre une première électrode et une seconde électrode,
∘ un premier collecteur de courant (2) disposé sur la première électrode,
- déposer une solution de fluoropolymère sur le premier collecteur de courant (2),
- faire évaporer le solvant de la solution, de manière à former une couche mince poreuse en fluoropolymère (3).

2. Procédé selon la revendication 1, **caractérisé en ce que** le fluoropolymère est choisi parmi le polytétrafluoroéthylène, l'éthylène propylène fluoré, l'éthylène tétrafluoroéthylène et le perfluoroalkoxy.

3. Procédé selon l'une des revendications 1 et 2, **caractérisé en ce que** la solution de fluoropolymère est déposée par sérigraphie, par jet d'encre ou par spray.

4. Procédé selon l'une quelconque des revendications précédentes, **caractérisé en ce que** le dépôt est réalisé à une température inférieure à 130°C.

5. Procédé selon l'une quelconque des revendications précédentes, **caractérisé en ce que** la solution de fluoropolymère a une concentration massique comprise entre 10% et 60%, et préférentiellement, entre 20% et 40%.

6. Procédé selon l'une quelconque des revendications précédentes, **caractérisé en ce que** des charges hydrophiles sont ajoutées à la solution de fluoropolymère.

7. Procédé selon l'une quelconque des revendications précédentes, **caractérisé en ce que** les pores de la couche mince poreuse en fluoropolymère (3) présentent des dimensions allant de 100nm à 1*µ*m.

8. Procédé selon l'une quelconque des revendications précédentes, **caractérisé en ce que** la couche mince poreuse en fluoropolymère (3) est formée de particules de fluoropolymère ayant un diamètre allant de 150nm à 350nm.

9. Procédé selon la revendication précédente, **caractérisé en ce que** les particules sont reliées entre elles par des fils de fluoropolymère ayant une longueur allant de 1*µ*m à 10*µ*m.

10. Procédé selon la revendication 9, **caractérisé en ce que** les fils de fluoropolymère présentent un diamètre inférieur à 100nm.

11. Procédé selon l'une quelconque des revendications précédentes, **caractérisé en ce que** le premier collecteur de courant (2) comporte au moins une zone poreuse (2b).

12. Procédé selon l'une quelconque des revendications précédentes, **caractérisé en ce que** plusieurs couches minces de fluoropolymère sont formées sur le premier collecteur de courant (2).

13. Procédé selon l'une quelconque des revendications précédentes, **caractérisé en ce que** la première électrode est une cathode et **en ce que** la pile à combustible est une pile à combustible à membrane échangeuse de proton.

14. Pile à combustible réalisée d'après le procédé selon l'une quelconque des revendications 1 à 13 comprenant :
- au moins un assemblage membrane-électrode (1), formé d'une membrane électrolytique disposée entre une première électrode et une seconde électrode,
- un premier collecteur de courant (2) disposé sur la première électrode,
- une couche mince poreuse en fluoropolymère (3) recouvrant le premier collecteur de courant (2) de manière à ce que la couche mince poreuse en fluoropolymère (3) soit séparée de l'assemblage membrane-électrode (1) par le premier collecteur de courant (2), ladite couche mince poreuse en fluoropolymère (3) étant formée de particules de fluoropolymère ayant un diamètre allant de 150nm à 350nm.

15. Pile selon la revendication 14, **caractérisée en ce que** le fluoropolymère est choisi parmi le polytétrafluoroéthylène, l'éthylène propylène fluoré, l'éthylène tétrafluoroéthylène et le perfluoroalkoxy.

16. Pile selon l'une des revendications 14 et 15, **caractérisée en ce que** la couche mince poreuse en fluoropolymère (3) a une épaisseur allant de 0,1*µ*m à 10*µ*m.

17. Pile selon l'une quelconque des revendications 14 à 16, **caractérisée en ce que** les pores de la couche mince poreuse en fluoropolymère (3) présentent des dimensions allant de 100nm à 1*µ*m.

18. Pile selon l'une quelconque des revendications 14 à 17, **caractérisée en ce que** les particules de fluoropolymère de la couche mince poreuse en fluoropolymère (3) sont reliées entre elles par des fils de fluoropolymère ayant une longueur allant de 1*µ*m à 10*µ*m

19. Pile selon l'une quelconque des revendications 14 à 18, **caractérisée en ce que** la couche mince poreuse en fluoropolymère (3) comporte des charges hydrophiles.

20. Pile selon l'une quelconque des revendications 14 à 19, **caractérisé en ce que** le premier collecteur de courant (2) comporte au moins une zone poreuse (2b).

21. Pile selon l'une quelconque des revendications 14 à 20, **caractérisé en ce que** la pile comporte un second collecteur de courant (4), disposé sur la seconde électrode, et **en ce qu'**une mince poreuse en fluoropolymère (5) recouvre le second collecteur de courant (4).

## Patentansprüche

1. Verfahren zur Herstellung einer Brennstoffzelle, welches die folgenden aufeinanderfolgenden Schritte umfasst:
- Bereitstellen eines Substrats, umfassend:
• wenigstens eine Membran-Elektroden-Anordnung (1), die von einer Elektrolytmembran, welche zwischen einer ersten Elektrode und einer zweiten Elektrode angeordnet ist, gebildet ist,
• einen ersten Stromkollektor (2), der auf der ersten Elektrode angeordnet ist,
- Abscheiden einer Fluorpolymerlösung auf dem ersten Stromkollektor (2),
- Verdampfen des Lösungsmittels der Lösung, um eine dünne poröse Schicht aus Fluorpolymer (3) zu bilden.

2. Verfahren nach Anspruch 1, **dadurch gekennzeichnet, dass** das Fluorpolymer aus Polytetrafluorethylen, fluoriertem Ethylen-Propylen, Ethylen-Tetrafluorethylen und Perfluoralkoxy ausgewählt ist.

3. Verfahren nach einem der Ansprüche 1 und 2, **dadurch gekennzeichnet, dass** die Fluorpolymerlösung durch Siebdruck, durch Tintenstrahl oder im Aufsprayverfahren abgeschieden wird.

4. Verfahren nach einem der vorhergehenden Ansprüche, **dadurch gekennzeichnet, dass** die Abscheidung bei einer Temperatur von unter 130 °C durchgeführt wird.

5. Verfahren nach einem der vorhergehenden Ansprüche, **dadurch gekennzeichnet, dass** die Fluorpolymerlösung eine Massekonzentration im Bereich zwischen 10 % und 60 % und vorzugsweise zwischen 20 % und 40 % aufweist.

6. Verfahren nach einem der vorhergehenden Ansprüche, **dadurch gekennzeichnet, dass** der Fluorpolymerlösung hydrophile Füllstoffe zugegeben werden.

7. Verfahren nach einem der vorhergehenden Ansprüche, **dadurch gekennzeichnet, dass** die Poren der dünnen porösen Fluorpolymerschicht (3) Abmessungen im Bereich von 100 nm bis 1 µm aufweisen.

8. Verfahren nach einem der vorhergehenden Ansprüche, **dadurch gekennzeichnet, dass** die dünne poröse Fluorpolymerschicht (3) aus Fluorpolymerpartikeln mit einem Durchmesser von 150 nm bis 350 nm gebildet ist.

9. Verfahren nach dem vorhergehenden Anspruch, **dadurch gekennzeichnet, dass** die Partikel durch Fluorpolymerfäden, die eine Länge im Bereich von 1 µm bis 10 µm aufweisen, untereinander verbunden sind.

10. Verfahren nach Anspruch 9, **dadurch gekennzeichnet, dass** die Fluorpolymerfäden einen Durchmesser von weniger als 100 nm aufweisen.

11. Verfahren nach einem der vorhergehenden Ansprüche, **dadurch gekennzeichnet, dass** der erste Stromkollektor (2) wenigstens einen porösen Bereich (2b) aufweist.

12. Verfahren nach einem der vorhergehenden Ansprüche, **dadurch gekennzeichnet, dass** mehrere dünne Fluorpolymerschichten auf dem ersten Stromkollektor (2) ausgebildet sind.

13. Verfahren nach einem der vorhergehenden Ansprüche, **dadurch gekennzeichnet, dass** die erste Elektrode eine Kathode ist und dass die Brennstoffzelle eine Protonenaustauschmembran-Brennstoffzelle ist.

14. Brennstoffzelle, die gemäß dem Verfahren nach einem der Ansprüche 1 bis 13 hergestellt ist, umfassend:
- wenigstens eine Membran-Elektroden-Anordnung (1), die von einer Elektrolytmembran, welche zwischen einer ersten Elektrode und einer zweiten Elektrode angeordnet ist, gebildet ist,
- einen ersten Stromkollektor (2), der auf der ersten Elektrode angeordnet ist,
- eine dünne poröse Fluorpolymerschicht (3), die den ersten Stromkollektor (2) bedeckt, so dass die dünne poröse Fluorpolymerschicht (3) von der Membran-Elektroden-Anordnung (1) durch den ersten Stromkollektor (2) getrennt ist, wobei die dünne poröse Fluorpolymerschicht (3) von Fluorpolymerpartikeln mit einem Durchmesser im Bereich von 150 nm bis 350 nm gebildet ist.

15. Zelle nach Anspruch 14, **dadurch gekennzeichnet, dass** das Fluorpolymer aus Polytetrafluorethylen, fluoriertem Ethylen-Propylen, Ethylen-Tetrafluorethylen und Perfluoralkoxy ausgewählt ist.

16. Zelle nach einem der Ansprüche 14 und 15, **dadurch gekennzeichnet, dass** die dünne poröse Fluorpolymerschicht (3) eine Dicke im Bereich von 0,1 µm bis 10 µm aufweist.

17. Zelle nach einem der Ansprüche 14 bis 16, **dadurch gekennzeichnet, dass** die Poren der dünnen porösen Fluorpolymerschicht (3) Abmessungen im Bereich von 100 nm bis 1 µm aufweisen.

18. Zelle nach einem der Ansprüche 14 bis 17, **dadurch gekennzeichnet, dass** die Fluorpolymerpartikel der dünnen porösen Fluorpolymerschicht (3) durch Fluorpolymerfäden, die eine Länge im Bereich von 1 µm bis 10 µm aufweisen, untereinander verbunden sind.

19. Zelle nach einem der Ansprüche 14 bis 18, **dadurch gekennzeichnet, dass** dünne poröse Fluorpolymerschicht (3) hydrophile Füllstoffe umfasst.

20. Zelle nach einem der Ansprüche 14 bis 19, **dadurch gekennzeichnet, dass** der erste Stromkollektor (2) wenigstens einen porösen Bereich (2b) aufweist.

21. Zelle nach einem der Ansprüche 14 bis 20, **dadurch gekennzeichnet, dass** die Zelle einen zweiten Stromkollektor (4) aufweist, der auf der zweiten Elektrode angeordnet ist, und dass eine dünne poröse Fluorpolymerschicht (5) den zweiten Stromkollektor (4) bedeckt.

## Claims

1. Fabrication method of a fuel cell comprising the following successive steps:
- providing a substrate comprising:
∘ at least one membrane-electrode assembly (1), formed by an electrolytic membrane arranged between a first electrode and a second electrode,
∘ a first current collector (2) arranged on the first electrode,
- depositing a fluoropolymer solution on the first current collector (2),
- making the solvent of the solution evaporate so as to form a porous thin layer of fluoropolymer (3).

2. Method according to claim 1, **characterized in that** the fluoropolymer is chosen from polytetrafluoroethylene, fluorinated ethylene propylene, ethylene tetrafluoroethylene and perfluoroalkoxy.

3. Method according to one of claims 1 and 2, **characterized in that** the porous thin layer of fluoropolymer (3) is deposited by screen-printing, by inkjet or by spraying.

4. Method according to any one of the foregoing claims, **characterized in that** deposition is performed at a temperature of less than 130°C.

5. Method according to any one of the foregoing claims, **characterized in that** the fluoropolymer solution has a mass concentration comprised between 10% and 60%, and preferentially between 20% and 40%.

6. Method according to any one of the foregoing claims, **characterized in that** hydrophilic charges are added to the fluoropolymer solution.

7. Method according to any one of the foregoing claims, **characterized in that** the pores of the porous thin layer of fluoropolymer (3) present dimensions ranging from 100nm to 1*µ*m.

8. Method according to any one of the foregoing claims, **characterized in that** the porous thin layer of fluoropolymer (3) is formed by fluoropolymer particles having a diameter ranging from 150nm to 350nm.

9. Method according to the previous claim, **characterized in that** the particles are bonded to one another by fluoropolymer wires having a length ranging from 1*µ*m to 10*µ*m.

10. Method according to claim 9, **characterized in that** the fluoropolymer wires present a diameter of less than 100nm.

11. Method according to any one of the foregoing claims, **characterized in that** the first current collector (2) comprises at least one porous area (2b).

12. Method according to any one of the foregoing claims, **characterized in that** several thin layers of fluoropolymer are formed on the first current collector (2).

13. Method according to any one of the foregoing claims, **characterized in that** the first electrode is a cathode and **in that** the fuel cell is a proton exchange membrane fuel cell.

14. Fuel cell fabricated from the method according to any one of the claims 1 to 13 comprising:
- at least one membrane-electrode assembly (1), formed by an electrolytic membrane arranged between a first electrode and a second electrode,
- a first current collector (2) arranged on the first electrode,
- a porous thin layer of fluoropolymer (3) covering the first current collector (2) so that the porous thin layer of fluoropolymer (3) is separated from the membrane-electrode assembly (1) by the first current collector (2), said porous thin layer of fluoropolymer (3) being formed by fluoropolymer particles having a diameter ranging from 150nm to 350nm.

15. Cell according to claim 14, **characterized in that** the fluoropolymer is chosen from polytetrafluoroethylene, fluorinated ethylene propylene, ethylene tetrafluoroethylene and perfluoroalkoxy.

16. Cell according to any one of the claims 14 to 15, **characterized in that** the porous thin layer of fluoropolymer (3) has a thickness ranging from 0.1*µ*m to 10*µ*m.

17. Cell according to any one of the claims 14 to 16, **characterized in that** the pores of the porous thin layer of fluoropolymer (3) present dimensions ranging from 100nm to 1*µ*m.

18. Cell according to any one of the claims 14 to 17, **characterized in that** the fluoropolymer particles of the porous thin layer of fluoropolymer (3) are bonded to one another by fluoropolymer wires having a length ranging from 1*µ*m to 10*µ*m

19. Cell according to any one of the claims 14 to 18, **characterized in that** the porous thin layer of fluoropolymer (3) comprises hydrophilic charges.

20. Cell according to any one of the claims 14 to 19, **characterized in that** the first current collector (2) comprises at least one porous area (2b).

21. Cell according to any one of the claims 14 to 20, **characterized in that** the cell comprises a second current collector (4), arranged on the second electrode, and **in that** a porous thin layer of fluoropolymer (5) covers the second current collector (4).
